# EUROPEAN PATENT APPLICATION

(11) **EP 4 703 114 A2**
(43) Date of publication of application: **04.03.2026**
(21) Application number: 25192418.9
(22) Date of filing: 29.07.2025
(51) Int. Cl.: B29C 33/42, B29C 33/68, B29C 43/22, B29C 43/24

(54) **SYSTEMS AND METHODS FOR MAKING EXERCISE RESISTANCE BANDS TEXTURED ON BOTH SIDES**

(30) Priority: 26.08.2024 IN 202421064393
(71) Applicant: Garware Fulflex India Pvt Limited, 411045 Pune (IN)
(72) Inventor: JAIN, Padmesh, 411045 Pune (IN)
(74) Representative: Two IP

(57) **Abstract**

A rubber sheet product with both sides having a textured surface is produced in accordance with the present invention. A low-shrinkage thermoplastic textile fiber separator sheet separates layers of rubber sheeting that would otherwise stick together during the production of the rubber sheet. The separator is used in place of talc or dust that is commonly used to separate layers of rubber sheeting during or after the calendaring process and prior to the vulcanization process (after vulcanization, the rubber is no longer naturally tacky). In certain embodiments, the separator is constructed using a weave of not more than 90 x 70 threads/square inch so that it creates an impression on the material to be separated, thereby affording the material a textured surface.

## Description

### FIELD OF THE INVENTION

The present invention generally relates to processing of rubber exercise bands. In particular, the present invention is directed to systems and methods for making rubber sheets for resistance exercise bands that are textured on both sides for improving grip of the bands.

### BACKGROUND

Elastic exercise bands are commonly used to providing resistance during exercise, such as during fitness classes and for physical therapy uses. Typically, the bands are stretched and released a number of times during such activities. For example, a user may hold one end of a band stationary in one hand while pulling the other end of the band with his other hand.

Commercially available elastic exercise bands are often made from natural rubber latex and are commonly provided in different resistance levels in order to provide the requisite resistance level desired for the particular exercise to be performed. The latex bands are commonly produced as a cast sheet or a calendared sheet which is then provided in lengths or in a continuous roll, allowing bands to be cut to desired lengths. The surfaces of these bands are plain (or relatively smooth) on both the sides, which may not provide adequate grip for users while using these bands..

### SUMMARY OF THE DISCLOSURE

A process for producing a textured, dust free, rubber sheet is provided that includes calendaring a rubber material into a rubber sheet, combining the rubber sheet on a drum with a separator, without using any dusting agent, such that a roll with alternating layers of the rubber sheet and the separator is formed, wherein the separator is a low shrinkage, thermoplastic textile with a thread count configured to impart an impression on the rubber sheet such that the impression provides a textured grip for a user of the rubber sheet, heating the roll of combined rubber sheet and separator so as to vulcanize the rubber sheet, and separating the vulcanized rubber sheet from the separator.

A dust free rubber sheet having a textured surface on both sides for production of exercise resistance bands is prepared by a process that includes calendaring a rubber material into a rubber sheet of a predetermined thickness, combining the rubber sheet on a drum with a separator without using any dusting agent via a separation system, wherein the separator is a low shrinkage, thermoplastic textile with a thread count configured to impart an impression on the rubber sheet such that the impression provides a textured grip for a user of a band made from the rubber sheet, and wherein the separation system is configured to provide the separator to the drum for combination with the rubber sheet such that a roll with alternating layers of the rubber sheet and the separator is formed, heating the combined rubber sheet and separator, and separating the rubber sheet from the separator via the separation system.

### BRIEF DESCRIPTION OF THE DRAWINGS

For the purpose of illustrating the disclosure, the drawings show aspects of one or more embodiments of the disclosure. However, it should be understood that the present disclosure is not limited to the precise arrangements and instrumentalities shown in the drawings, wherein:
FIG. 1 is a perspective view of a rubber processing system in accordance with an embodiment of the present invention;
FIG. 2 is a side plan view of the rubber processing system of FIG. 1;
FIG. 3 is a side view of a portion of a roll on a drum of alternating rubber sheet and separator layers in accordance with an aspect of the present invention; and
FIG. 4 is a process diagram of a method for making a rubber sheet product with both sides having a textured surface in accordance with an embodiment of the present invention.

### DETAILED DESCRIPTION

A rubber sheet product with both sides having a textured surface is produced in accordance with the present invention. A low-shrinkage thermoplastic textile fiber separator sheet (which may be referred to herein as a "separator") separates layers of rubber sheeting that would otherwise stick together during the production of the rubber sheet.

The separator is used in place of talc or dust that is commonly used to separate layers of rubber sheeting during or after the calendaring process and prior to the vulcanization process (after vulcanization, the rubber is no longer naturally tacky). In certain embodiments, the separator is constructed using a weave of not more than 90 x 70 threads/square inch so that it creates an impression on the material to be separated. In an embodiment, the separator is thermally stabilized prior to use between the rubber. In certain embodiments, the separator is treated with a silicone, such as, but not limited to, polysiloxanes or polydimethylsiloxanes, prior to use between the rubber.

At a high level, the calendering process forces softened, un-vulcanized rubber into the center of counter-rotating rollers. Rollers compress the material, reducing its thickness, and the overall thickness of the rubber sheets is determined by the gap distance between rollers, which can be adjusted to provide varying thicknesses. Once the material passes through cooling rollers, it is vulcanized. Vulcanization, generally, takes place in hot air or steam ovens or rotary curing at specified temperature and pressure for a specified time, and may include various chemicals, such as, but not limited to sulfur compounds. For example, vulcanization can occur in a hot air oven for a given duration, such as for 4 hours, at 140 to 150°C. Although the system and process described herein is focused on the processing of rubber (both natural and synthetic), embodiments of the system and process can be readily adapted to be used with other materials, e.g., thermoplastics, for which a textured surface is desired.

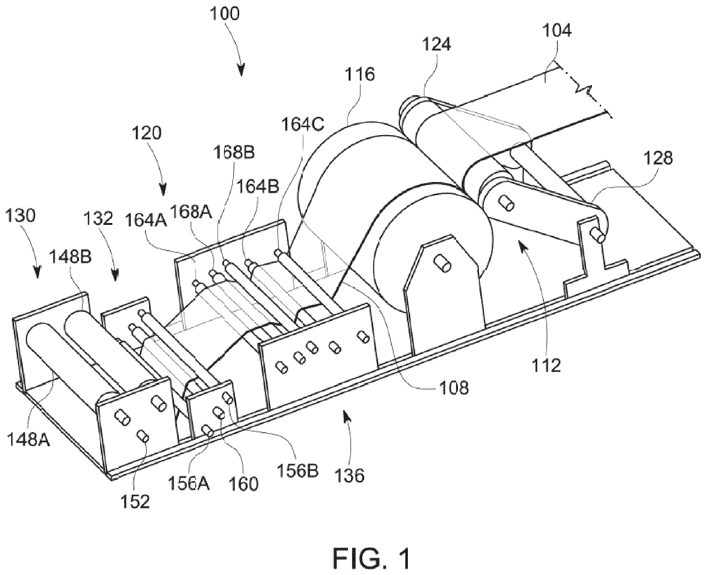

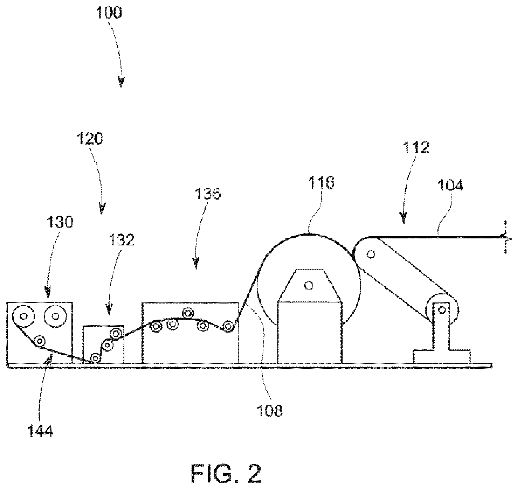

Turning now to the figures, and particularly with reference to FIGS. 1 and 2, there is shown a system 100 according to an embodiment of the present invention. (The system shown in FIGS. 1 and 2 are the same and thus not all element numbers have been reproduced on FIG. 2 to allow for clarity.) System 100, at a high level, merges a calendarized rubber sheet 104 with a separator 108 before or during the vulcanization process so as to keep the sheets of calendarized rubber from sticking to each other. Separator 108 can then, when no longer needed, be separated from rubber sheet 104 and reused. As shown in FIGS. 1 and 2, system 100 can include a take-up system 112, a drum 116, and a separator system 120.

Take-up system 112 receives rubber sheet 104 (typically from a calendaring system (not shown)) and facilitates its collection onto drum 116. In an embodiment, take-up system 112 includes at least one take-up roller 124 which is attached to a pivot arm 128. In operation, take-up system 112 maintains tension on rubber sheet 104 coming from the calendaring system and also the positioning of the calendarized rubber sheet on drum 116.

Drum 116 rotates so as to simultaneously collect rubber sheet 104 as well as separator 108. Separator system 120 provides separator 108 to be wound (and subsequently unwound) with rubber sheet 104. In an embodiment, and as shown in FIGS. 1 and 2, separator system 120 includes a fabric release unit 130, a tensioning system 132, and a guidance system 136, each of which serve to prepare and guide separator 108 on a path 144 (shown in FIG. 2) to drum 116. As shown in the figures, path 144 begins at fabric release unit 130 and ends at drum 116.

Fabric release unit 130 stores and releases rolls of separator 108. In an embodiment, fabric release unit 130 includes a plurality of fabric rollers 148 (148A and 148B) and at least one idler roller 152. Fabric roller can be configured to hold rolls of separator 108. Idler roller 152 guides separator 108 to tensioning system 132.

Tensioning system 132 provides consistent tension on separator 108 as it travels to drum 116. In an embodiment, tensioning system 132 includes a plurality of idler rollers 156 (156A and 156B) and a load cell roller 160. Load cell roller 160 can provide a signal, representative of a tension. In an embodiment one or more of the rollers that are part of tensioning system 132 can be adjusted to alter the tension on separator 108. The load measured by load cell roller 160 should not preferably exceed 200 N.

Guidance system 136 is designed and configured to ensure crease free application of the separator 108. Guidance system 136 includes a plurality of idler rollers 164 (idler rollers 164A, B, and C) and a plurality of spiral rollers 168 (spiral rollers 168A and B), which work cooperatively to maintain the position of separator 108 relative to drum 116 so that the separator is joined to rubber sheet 104 without creases in the separator. In certainly embodiments, guidance system 136 may also knock free particles and debris from separator 108 before it makes contact with calendarized rubber sheet 104 (which, as a naturally tacking substance will undesirably tend to attract debris and particulate matter). Spiral rollers 168 can be configured to "brush" off particulates and debris as separator 108 makes contact with the spiral ribs that are on each of the spiral rollers. Idler rollers 164 are positioned so as to ensure contact between separator 108 and each of spiral rollers

Path 144, based on the embodiment of separator system 120, is best seen in FIG. 2. As shown, separator 108 is unspooled from one of fabric rollers 148 and passes under idler roller 152 and idler roller 156A, then over load cell roller 160, then under idler roller 156B to guidance system 136. Separator 108 then passes over idler roller 164A, over spiral roller 168A, under spiral roller 168B, over idler roller 164B, and under idler roller 164C, before mating up with calenderized rubber sheet 104 at drum 116.

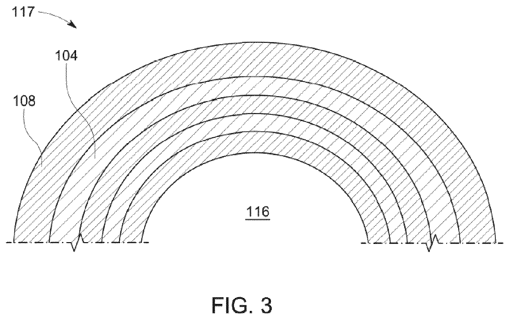

Separator 108, at a high level, has low shrinkage and is weaved into warp and weft direction such that a texture is imparted on both sides of the rubber sheet 104 when the two are mated together on drum 116, forming a roll 117 of alternating layers of rubber sheet and separator (as shown in FIG. 3). Separator 108 is also preferably easily released from rubber sheet 104 after vulcanization and is durable enough to be reused. In an embodiment, separator 108 is a low-shrinkage thermoplastic having a shrinkage ratio of less than 1.5.

In an embodiment, separator 108 is a low shrinkage thermoplastic textile fiber such as, but not limited to, nylon, polyester, and nylon 6/6.

Separator 108 is preferably thermally stabilized prior to mating with rubber sheet 104. Thermally stabilizing separator 108 reduces the probability of additional shrinkage occurring during the vulcanization process, which applies heat to drum 116. If additional shrinkage occurs during vulcanization, the texture of the rubber sheet 104 may be compromised. In an embodiment, separator 108 is heated to a temperature that is greater than the vulcanization temperature. In an embodiment, separator 108 is heated to a temperature of above 177° C. Separator 108 is preferably readily detachable from rubber sheet 104 after vulcanization and is reusable. In an embodiment, separator 108 is chemically treated prior to thermally stabilizing the separator. In this embodiment, the chemical used to treat separator 108 improves the releasability of the separator from rubber sheet 104 and extends the useful life of the separator.

In an embodiment, separator 108 is treated with silicones, such as but not limited to polysiloxanes or polydimethylsiloxanes. In an embodiment, after being emulsified with silicones, separator 108 is heat treated.

Separator 108 imparts an impression on calendarized rubber sheet 104 when layered on drum 116, created a textured surface on both sides of rubber sheet 104. In an embodiment, separator 108 is weaved such that a textured surface on calenderized rubber sheet 104 provides an enhanced grip for s user of bands made from rubber sheet 104. In an embodiment, separator 108 has a thread count of 90 x 70 threads per inch so as to achieve a textured surface on both sides of rubber sheet 104.

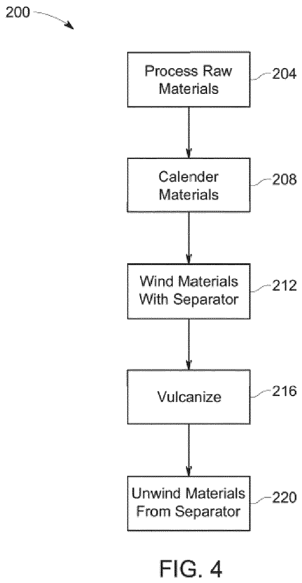

Turning now to FIG. 4, a method 200 of making a textured, dust free, rubber sheet is described. At step 204 raw materials are processed. In an embodiment processing raw materials can include, but are not limited to, mixing raw rubber material together, extruding and straining the raw materials, and testing the raw materials for qualities, such as viscosity, Rheometric test, stress relaxation, scorch, and other qualities of the raw rubber materials.

At step 208, the raw materials are calendared. Calendaring processes rubber by forcing the material softened by heat through typically two to five counter-rotating rollers. The resulting rubber sheet has a thickness that is determined by the spacing between the rollers. In an embodiment, a four roll calendering system is used to thin the raw materials to the desired thickness, however, more or fewer rollers may be used. As is known in the art, the calendaring system can include heated rollers so as to aid in the thinning of the raw materials.

At step 212, the calendared rubber sheet is wound onto a large roller with a separator sheet, such as one or more embodiments of separator 108 described herein, so as to keep the calenderized rubber sheet from sticking to itself as it is rolled onto the large roller. In an embodiment, the separator sheet and the calenderized rubber sheet are combined on a drum, such as drum 116 of system 100 described herein. The roll formed on the drum thus has alternating layers of the separator sheet and the rubber sheet such that a texture is imparted on both sides of the rubber sheet based on the impression provided by the separator sheet.

At step 216, the large roller is placed into a vulcanization oven. In an embodiment, the large roller is placed into a hot air oven and is heated for a predetermined amount of time and at a predetermined temperature. In an embodiment, the large roller is heated for about 4 hours at about 140 to 150° C.

At step 220, the large roller is removed from the vulcanization oven and placed on a sheet removal device. In an embodiment, the sheet removal device can be substantially similar to system 100 only operating in reverse. In this embodiment, the separator and the vulcanized rubber sheet are unwound from the large roller, with the separator being rewound onto a roller, such as one of fabric rollers 148 and the vulcanized rubber sheet is wound onto its own roller for further processing. At this point, the vulcanized rubber sheet includes textured surfaces on both sides from the impression left by the separator, and after vulcanization the rubber is no longer tacky so the textured surfaces remain.

Various modifications and additions can be made without departing from the spirit and scope of this invention. Features of each of the various embodiments described above may be combined with features of other described embodiments as appropriate in order to provide a multiplicity of feature combinations in associated new embodiments. Furthermore, while the foregoing describes a number of separate embodiments, what has been described herein is merely illustrative of the application of the principles of the present invention. Additionally, although particular methods herein may be illustrated and/or described as being performed in a specific order, the ordering is highly variable within ordinary skill to achieve aspects of the present disclosure. Accordingly, this description is meant to be taken only by way of example, and not to otherwise limit the scope of this invention.

## Claims

1. A process for producing a textured, dust free, rubber sheet, comprising: calendaring a rubber material into a rubber sheet;
combining the rubber sheet on a drum with a separator, without using any dusting agent, such that a roll with alternating layers of the rubber sheet and the separator is formed, wherein the separator is a low shrinkage, thermoplastic textile with a thread count configured to impart an impression on the rubber sheet such that the impression provides a textured grip for a user of the rubber sheet;
heating the roll of combined rubber sheet and separator so as to vulcanize the rubber sheet; and
separating the vulcanized rubber sheet from the separator.

2. The process according to claim 1, wherein the separator is plain weaved.

3. The process according to claim 1, wherein the separator has a thread count of not more than 90 x 70 threads per square inch.

4. The process according to claim 1, wherein the separator is chemically treated with a silicone.

5. The process according to claim 4, wherein the silicone is selected from a group including a polysiloxane and a polydimethylsiloxane.

6. The process according to claim 5, wherein the separator is thermally stabilized after treatment with the silicone.

7. The process according to claim 6, wherein the separator is heated to above a temperature of vulcanizing prior to combining the separator with the rubber sheet.

8. The process according to claim 7, wherein the separator is heated above 150° C.

9. The process according to claim 1, wherein the combining uses a separator system that includes a fabric release unit, a tensioning system, and a guidance system, wherein the fabric release unit includes at least one fabric roller, wherein the tensioning system includes at least one load cell roller, and wherein the guidance system includes at least one spiral roller.

10. A dust free rubber sheet having a textured surface on both sides manufactured by the process of claim 1.

11. A dust free rubber sheet having a textured surface on both sides for production of exercise resistance bands prepared by a process comprising the steps of:
calendaring a rubber material into a rubber sheet of a predetermined thickness;
combining the rubber sheet on a drum with a separator without using any dusting agent via a separation system, wherein the separator is a low shrinkage, thermoplastic textile with a thread count configured to impart an impression on the rubber sheet such that the impression provides a textured grip for a user of a band made from the rubber sheet, and wherein the separation system is configured to provide the separator to the drum for combination with the rubber sheet such that a roll with alternating layers of the rubber sheet and the separator is formed;
heating the combined rubber sheet and separator; and
separating the rubber sheet from the separator via the separation system.

12. The rubber sheet according to claim 11, wherein the separator is plain weaved.

13. The rubber sheet according to claim 11, wherein the separator has a thread count of not more than 90 x 70 threads per square inch.

14. The rubber sheet according to claim 11, wherein the separator is heated above 150° C prior to use in the separator system.

15. The rubber sheet according to claim 11, wherein the separator is chemically treated with a silicone.

16. The rubber sheet according to claim 15, wherein the silicone is selected from a group including a polysiloxane and a polydimethylsiloxane.

17. The rubber sheet according to claim 16, wherein the separator is heated to above a temperature of vulcanizing prior to use in the separator system.

18. The rubber sheet according to claim 15, wherein the separator is thermally stabilized after treatment with the silicone.
